(19) Europäisches Patentamt / European Patent Office / Office européen des brevets

(11) **EP 3 688 543 B1**

(12) **EUROPÄISCHE PATENTSCHRIFT**

(45) Veröffentlichungstag und Bekanntmachung des Hinweises auf die Patenterteilung:
**17.03.2021 Patentblatt 2021/11**

(21) Anmeldenummer: **19820662.5**

(22) Anmeldetag: **09.12.2019**

(51) Int Cl.:
***G05D 1/02*** *(2020.01)*

(86) Internationale Anmeldenummer:
**PCT/CH2019/050028**

(87) Internationale Veröffentlichungsnummer:
**WO 2020/118459 (18.06.2020 Gazette 2020/25)**

(54) **VERFAHREN ZUR NAVIGATION EINES ROBOTERS UND ROBOTER ZUR AUSFÜHRUNG DES VERFAHRENS**

METHOD FOR THE NAVIGATION OF A ROBOT, AND ROBOT FOR EXECUTING SAID METHOD

PROCÉDÉ DE NAVIGATION D'UN ROBOT ET ROBOT POUR LA MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2018 CH 15282018**

(43) Veröffentlichungstag der Anmeldung:
**05.08.2020 Patentblatt 2020/32**

(73) Patentinhaber: **Ronovatec AG**
**6405 Immensee (CH)**

(72) Erfinder:
• **GÄRTNER, Ivo**
**6003 Luzern (CH)**

• **GLIGOROV, Zvonko**
**8854 Galgenen (CH)**

(74) Vertreter: **Stump, Beat**
**Stump & Partner AG**
**Zimmergasse 16**
**8008 Zürich (CH)**

(56) Entgegenhaltungen:
**EP-A1- 3 018 548      WO-A2-2007/109624**

• **Bak Martin: "Control of Systems with Constraints", Ph. D. Thesis, 1. November 2000 (2000-11-01), XP055629698, Technical University of Denmark Gefunden im Internet: URL:http://www8.cs.umu.se/research/ifor/dl /Control/Control%20of%20systems%20with%20 c onstraints.pdf [gefunden am 2019-10-08]**

**Beschreibung**

Die vorliegende Erfindung betrifft ein Verfahren zur Navigation eines Fahrzeugs nach dem Oberbegriff von Anspruch 1 und ein Fahrzeug zur Ausführung dieses Verfahrens nach dem Oberbegriff von Anspruch 12.

Navigierende Fahrzeuge, dabei auch Roboter aller Art sind weit verbreitet und werden beispielsweise als selbstfahrende Mäher eingesetzt. Im Stand der Technik ist bekannt, dass dem Navigationssystem die Grenzen eines zu bearbeitenden (beispielweise zu mähenden) Gebiets eingegeben werden, wobei das Navigationssystem dann seine Position relativ zu den Grenzen laufend bestimmt, beim Erreichen einer Grenze den Kurs des Roboters so ändert, dass dieser sich im Gebiet weiterbewegt. Im Ergebnis fährt der Roboter chaotisch im zu bearbeitenden Gebiet hin- und her, so dass nach einem Zeitablauf das ganze Gebiet bearbeitet ist.

Die EP 3 018 548 zeigt einen navigierenden Roboter, der sich innerhalb eines Arbeitsgebiets bewegen soll, beispielsweise um Rasen zu mähen. Das Steuerungssystem wird zuerst in einem Aufnahmemodus für einen Referenzpfad (reference trail recording mode) trainiert, indem es diesen abfährt und dabei Zwischeninformationen genannte Daten zum Arbeitsgebiet generiert, die im Arbeitseinsatz des Roboters in einem Navigationsmodus (navigation mode) verwendet werden, um eine präzise Navigation während der Arbeit zu ermöglichen. Für die Navigation können dann zusammen mit den Zwischeninformationen Daten aus verschiedenen Sensoren wie Kamerabilder oder Positionssignale von UWB Ankern und Odometriedaten eines Schlepprades des Roboters mit einem als Kalman Filter bekannten mathematischen Algorithmus zu einer "robusten" Schätzung der aktuellen Position des Roboters fusioniert werden.

Das Training und die Generierung der Zwischeninformationen sind aufwendig. Entsprechend ist es die Aufgabe der vorliegenden Erfindung, ein navigierendes Fahrzeug bereit zu stellen, das ohne die oben erwähnten Zwischeninformationen einem vorbestimmten Pfad entlang präzise navigiert.

Die Aufgabe wird gelöst durch die kennzeichnenden Merkmale der Ansprüche 1 und 12.

Dadurch, dass im ein kinematisches Modell des Fahrzeugs darstellenden Zustandsbeobachter die Gewichtung der Daten zum Fahrmodus, hier Daten aus der Distanzmessung und von der Odometrie, nach der Geometrie des vorbestimmten Pfads dynamisch geändert wird, ergibt sich eine verbesserte und damit präzisere Navigation, da jeweils bei einer Änderung der Zuverlässigkeit dieser Daten deren Gewichtung entsprechend angepasst, d.h. der Zuverlässigkeit entsprechend erhöht oder verringert werden kann. Dadurch kann auch ein vorbestimmter Pfad effizienter gelegt werden, sei dies im Hinblick auf nur kleine Überlappung neben einander verlaufender Bahnen oder einen optimalen Verlauf mit kürzest möglicher Länge bei gleichzeitig minimiertem Fehler in der vollständigen Abdeckung der gesamten zu bearbeitenden Fläche.

Weitere bevorzugte Ausführungsformen weisen die Merkmale der abhängigen Ansprüche auf. Die Erfindung wird nachstehend anhand der Figuren noch etwas näher beschrieben.

Es zeigt:

Figur 1    schematisch ein von einem Fahrzeug zu befahrendes Gebiet am Beispiel eines zu mähenden Fussballplatzes,

Figur 2    schematisch eine Ausführungsform eines Fahrzeugs,

Figur 3    ein Ablaufdiagramm zur Bestimmung zur Navigation des Roboters (hat einen Teil Loaklisierung, einen Teil Positions und Richtungsbestimmung sowie einen Teil Trajektorenregler), und

Figur 4    ein dem Fachmann an sich bekanntes Schema einer Regelstrecke mit einem Zustandsbeobachter, der gemäss der vorliegenden Erfindung ausgebildet werden kann.

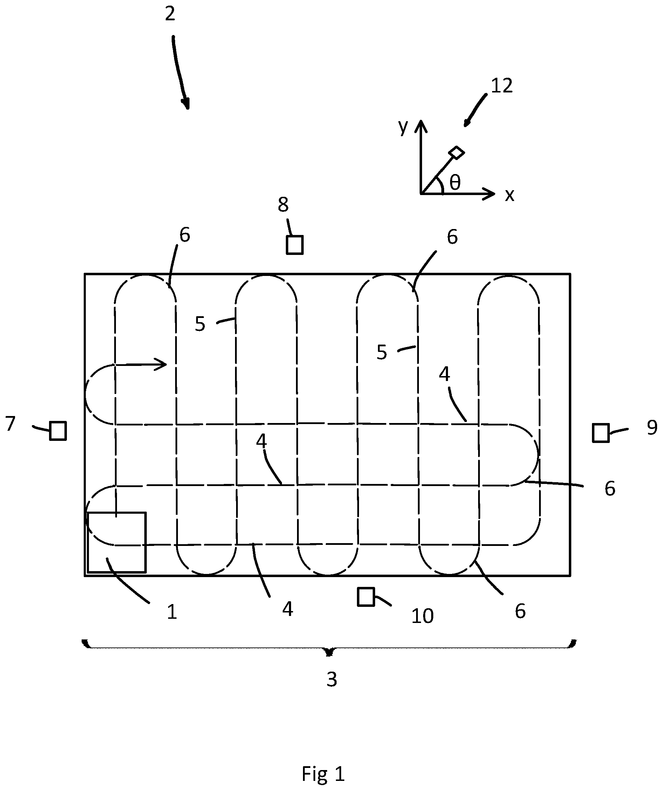

Figur 1 zeigt schematisch eine Ausführungsform der vorliegenden Erfindung anhand eines als Mähroboter 1 ausgebildeten Fahrzeugs für einen Fussballplatz 2. Der Mähroboter navigiert einem vorbestimmten Pfad 3 entlang, der aus in der Figur horizontalen, geraden Abschnitten 4 und vertikalen, geraden Abschnitten 5 besteht, die zusammen für den Betrachter des Fussballplatzes 1 ein Schachbrettmuster bilden, wie dies allgemein bekannt ist. In Kurven 6 wendet der Mähroboter jeweils, um das Schachbrettmuster im gemähten Rasen zu erzeugen. Erfindungsgemäss navigiert der Mähroboter 1 mit einer Abweichung von beispielsweise $\pm$ 4,5 cm für $\pm$ 3 6 (d.h. dass bei 99,7% der Werte von Messungen für die Abweichung vom vorbestimmten Pfad kleiner sind als $\pm$4,5 cm). Diese Genauigkeit erlaubt, die Überlappung angrenzender Bahnabschnitte entsprechend klein und damit auch die gesamte Länge des vorbestimmten Pfads minimal zu halten, wobei zugleich auch kleine Inseln in Form von nicht gemähten Bereichen vermieden werden können. Zudem präsentiert sich bei dieser Präzision der Navigation das Schachbrettmuster dem Betrachter optisch perfekt mit den gewünschten geraden, parallelen Bahnen.

Für die Navigation des Mähroboters 1 sind hier vier UWB Anker 7 bis 10 vorgesehen, die um den Fussballplatz 2 herum angeordnet sind. Der Fachmann kann im konkreten Fall auch eine andere Anzahl, z.B. zwei, drei oder mehr als vier UWB Anker vorsehen. Eine Ortsbestimmung mittels Tri- bzw. Multilateration als solche ist dem Fachmann bekannt, wobei es auch denkbar ist, bei einfachen Verhältnissen mit Distanzmessungen nur in einer Ebene eine Bilateration vorzusehen, indem beispielsweise zwei UWB Anker in einer gewissen Entfernung vom vorbestimmten Pfad 3 angerordnet werden, so dass bei der Messung, die dann zwei Standorte ergibt, zum Vornherein einer wegfallen kann. An Stelle von UWB Ankern kann auch beispielsweise ein GNSS (global navigation satellite system) oder ein anderes, geeignetes System verwendet werden, das eine drahtlose Distanzmessung verwendet, bzw. Sender für Signale zur Distanzmessung aufweist.

An Stelle eines Fussballplatzes 2 kann natürlich beispielsweise ein anderes Arbeitsgebiet wie ein Golfplatz oder noch ein anderes Gelände auf irgend eine Art bearbeitet (beispielsweise gemäht) werden, wobei dann die Krümmungsradien des vom Mähroboter abzufahrenden vorbestimmten Pfads verschieden ausfallen, und beispielsweise auch durch die Kontur des Arbeitsgebietes gegeben sein können. Der vorbestimmte Pfad selber wird dann durch die Eigenschaften des jeweiligen Geländes vom Fachmann bestimmt. Bevorzugt sind dann UWB Anker um oder im Arbeitsgebiet verteilt geeignet angeordnet, wobei der Fachmann deren Standort im konkreten Fall geeignet bestimmen kann.

Für die Standortbestimmung und Navigation des Mähroboters 1 kann beispielsweise ein Koordinatensystem 12 verwendet werden, wobei die x,y Koordinaten für den Standort des Mähroboters 1 und der Winkel θ für dessen Ausrichtung bzw. Fahrtrichtung stehen.

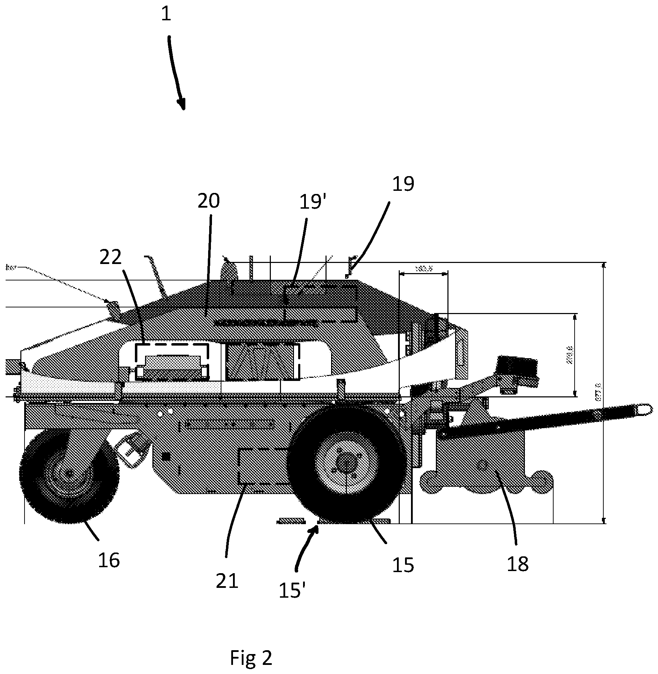

Figur 2 zeigt schematisch eine Ausführungsform des erfindungsgemässen, hier als Mähroboter 1 ausgebildeten navigierenden Fahrzeugs gemäss Figur 1 in einer seitlichen Ansicht. Ersichtlich ist ein seitlich am Mähroboter 1 angeordnetes, Antriebsrad 15, das ein zweites, gleiches Antriebsrad 15' auf der in der Figur abgewandten Seite des Mähroboters 1 verdeckt. Weiter ersichtlich ist ein Schlepprad 16, welches um eine vertikale Achse beweglich ist, so dass der Mähroboter 1 bei entsprechend unterschiedlich angetriebenen Antriebsrädern eine Kurve fährt. Es ergibt sich bevorzugt ein Fahrzeug, bei welchem zwei Räder 15,15' des Fahrzeugs bzw. Roboters in Fahrtrichtung neben einander angeordnet sind und ein drittes Rad (16) des Roboters als Schlepprad ausgebildet ist.

Vorne am Mähroboter 1 ist eine Anordnung 18 zum Mähen eines Rasens vorgesehen, die sich hier in ihrer hochgezogenen Ruhestellung befindet. Eine Antenne 19 mit einer Empfangseinheit 19' dient dem Empfang der Signale der UWB Anker 7 bis 10 (s. Figur 1). Es sei angemerkt, dass ein erfindungsgemäss ausgebildetes bzw. navigierendes Fahrzeug wie der Mähroboter (1) auch einen anders ausgebildeten Radantrieb aufweisen kann, beispielsweise 4 Räder mit einer konventionellen Lenkung von zwei neben einander angeordneten Rädern, oder eine andere Antriebskonfiguration bis hin zu einem Raupenantrieb.

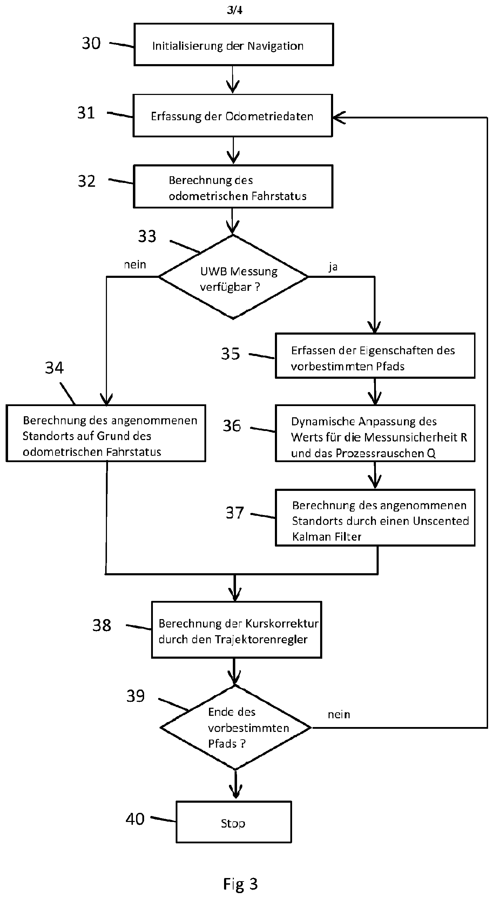

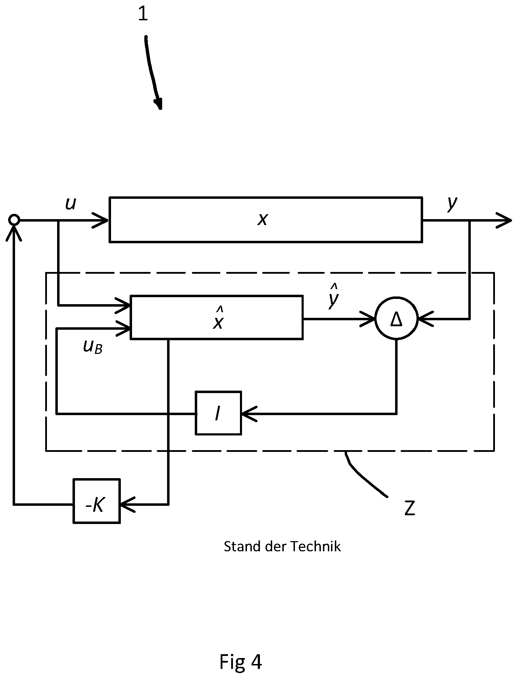

Durch das Gehäuse 20 des Mähroboters (1) verdeckt (bzw. zur Entlastung der Figur weggelassen) sind eine Antriebseinheit des Mähroboters 1 mit einer Lenkanordnung für den Antrieb der Antriebsräder, die bei Geradeausfahrt die Antriebsräder 15,15' mit gleicher, für Kurvenfahrt mit unterschiedlicher Drehzahl antreibt. Nur symbolisch angedeutet sind Sensoren 21, welche die Winkelstellung der Räder 15, 15' laufend detektieren und damit Odometriedaten zum Fahrzustand des Mähroboters 1 liefern, die in einer ebenfalls symbolisch dargestellten Steuerung 22 geeignet verarbeitet werden, s. dazu die Beschreibung zu den Figuren 3 und 4. Es ergibt sich damit bevorzugt ein Fahrzeug, bei welchem die Sensoren (21) für die Odometriedaten Sensoren aufweisen, welche die Drehung von zwei Rädern des Roboters erfassen.

In der Steuerung 22 sind Datenspeicher vorgesehen, die unter anderem die Daten zu einem vorbestimmten Pfad 3 (Figur 1) speichern können. Die Steuerung 22 ist ausgebildet, gestützt auf die Daten zum vorbestimmten Pfad 3, Antriebs und Lenkbefehle für den Antrieb der Räder 15,15' zu generieren, so dass sich der Mähroboter 1 dem vorbestimmten (Soll)Pfad 3 entlang bewegt. Dazu verarbeitet die Steuerung 22 die Odometriedaten der Sensoren 21 und die Daten der UWB Anker 7 bis 10 (Figur 1), welche der Steuerung 22 eine Ermittlung der Distanz des Mähroboters 1 (hier des Punktes in der Mitte der Achse zwischen den Rädern 15,15') über eine Time-of-Flight Auswertung ermöglichen. Bei einer Simulation der erfindungsgemässen Navigation, die zu der oben erwähnten Präzision mit einer Abweichung von ± 4,5 cm für ± 36 vom jeweiligen Punkt auf dem vorbestimmten Pfad führt, ist ein Roboter zu Grunde gelegt worden, der sich mit 1,2 m/s (maximal 3 m/s) bewegt, dessen Antriebsräder 15,15' einen Durchmesser von 400 mm und dessen Schlepprad einen Abstand von 935 mm von der Achse der Antriebsräder 15,15' aufweist.

Das hier als Mähroboter 1 ausgebildete navigierende Fahrzeug ist damit in der Lage, im Betrieb laufend seine aktuelle Position durch die erfindungsgemässe Verarbeitung (s. dazu die Beschreibung zu Figuren 3) der Odometriedaten und der Distanzdaten zu den UWB Ankern 7 bis 10 in der Steuerung 22 zu erkennen, dann Signale zur Kurskorrektur zu generieren, welche die Lenkanordnung umsetzt, indem die Antriebsräder 15, 15' geeignet mit unterschiedlicher Winkelgeschwindigkeit angetrieben werden. Im Ergebnis läuft der Mähroboter 1 mit der erfindungsgemäss möglichen Präzision dem vorbestimmten Pfad 3 (Figur 1) entlang.

Figur 3 zeigt ein Ablaufdiagramm zur erfindungsgemässen Navigation, wie diese gemäss einer Ausführungsform der Erfindung anhand eines Kalman Filters durch die Steuerung 22 vorgenommen wird. Im Schritt 30 wird die Navigation auf bekannte Weise initialisiert, beispielsweise indem eine erste Position des Mähroboters 1 am Beginn des vorbestimmten Pfads (hier in der linken unteren Ecke des Fussballfelds 2, s. Figur 1) durch UWB Messung bestimmt, dann der Mähroboter 1 eine kurze Strecke, z.B. 50 cm gefahren und eine zweite UWB Messung sowie eine odometrische Standortbestimmung vorgenommen wird. Dann ist der Ort und die Ausrichtung des Mähroboters bekannt, damit die Navigation initialisiert.

Im Schritt 31 werden beispielsweise (so auch in der oben erwähnten Simulation) alle 20 ms die momentanen Odometriedaten (z.B. die Winkelgeschwindigkeit für die beiden Antriebsräder 15,15', s. Figur 2,) erfasst, und bei einem sich daraus ergebenden Geschwindigkeitsschwellwert von mehr als 0,025 m/s angenommen, dass sich der Mähroboter 1 bewegt. Die Sensoren 21 erzeugen jedoch nicht die wahren Werte für die Winkelstellung der Antriebsräder 15,15', sondern ein mit Fehlern behaftetes Signal, wobei diese Fehler als Prozessrauschen mit einem Wert Q ausgedrückt werden können. Q ist dann die Varianz für den jeweils den Erwartungswert bildenden wahren Wert einer Winkelstellung eines Rads 15,15'.

Im Schritt 32 erfolgt die Berechnung des odometrischen Fahrstatus, d.h. die Berechnung der momentanen Geschwindigkeit und der momentanen Ausrichtung des Mähroboters 1 auf Grund der odometrischen Daten, hier der Winkeländerung der Antriebsräder 15,15'. Bevorzugt kann der odometrische Fahrstatus in kürzeren Zyklen bestimmt werden, als das bei der UWB Distanzmessung der Fall ist. Dann erfolgt eine Mittelung der odometrischen Geschwindigkeit und Ausrichtung auf den Zeitpunkt, an dem die UWB Messung verfügbar ist. In der oben erwähnten Simulation wurden die Odometriedaten alle 20 ms verarbeitet und eine UWB Distanzmessung alle 80 ms vorgenommen.

Im Schritt 33 wird geprüft, ob aktuelle UWB Messdaten zur Verfügung stehen, was in der Regel der Fall ist, aber auf Grund von Störungen in der Übermittlung der Daten zwischen einem UWB Anker 7 bis 10 und dem Mähroboter 1 auch nicht der Fall sein kann.

Stehen die UWB Messdaten nicht zur Verfügung, erfolgt der Sprung zum Schritt 34, in welchem die angenommene reale Position und Ausrichtung des Mähroboters 1 auf Grund nur der odometrischen Daten berechnet wird. Bevorzugt geschieht dies durch eine Mittelung eines momentanen Odometriewerts uk (Gewicht 0.7) mit den drei vergangenen u$_{k-1}$, u$_{k-2}$, u$_{k-3}$ (Gewicht 0.1), so dass alle 20 ms ein odometrischer Fahrstatus vorliegt.

Stehen aktuelle UWB Messdaten zur Verfügung, erfolgt der Sprung zum Zweig mit den Schritten 35 bis 37, in welchen die angenommene, reale Position mit Hilfe eines Kalman Filters durch die Fusion der odometrischen mit den UWB Daten berechnet wird.

Beispielsweise wird gemäss der Simulation alle 80 ms eine UWB Distanzmessung vorgenommen, bevorzugt jeweils sequentiell zu nur einem der UWB Anker 7 bis 10 in einer vorbestimmten Reihenfolge. Diese UWB Distanzmessung führt über die gemessene Distanz zum betreffenden UWB Anker 7 bis 10 zu einem aktuellen Standort des Mähroboters 1. Auch die Distanzmessungen streuen mit einer Varianz mit dem Wert R um den Erwartungswert, d.h. die wahre Distanz von einem Punkt auf der Mitte der Achse zwischen den Antriebsrädern 15, 15' (s. dazu die Beschreibung zu Figur 2) und dem jeweiligen Anker 7 bis 10, wobei die Varianz dem Datenblatt zu den UWB Ankern entnommen oder durch den Fachmann durch eigenen Messungen bestimmt werden kann. Aus der Varianz der UWB Distanzmessungen ergibt sich damit ein Wert für eine Messunsicherheit R, die bei den laufenden UWB Distanzmessungen jeweils vorliegt.

Im Schritt 35 gleicht die Steuerung 22 die im Moment vorhandene, angenommene Position des Mähroboters 1 mit dem vorbestimmten Pfad 3 ab und bestimmt, ob sich der Mähroboter 1 auf einer Kurve oder auf einer Geraden befindet, d.h. die Steuerung 22 erfasst Eigenschaften des vorbestimmten Pfads 3 am Ort, wo sich die von ihr festgestellte Position des Mähroboters 1 befindet. Bevorzugt wird gemäss der Simulation auf dem vorbestimmten Pfad 3 eine Kurve angenommen, wenn bei Betriebsgeschwindigkeit des Mähroboters 1 dessen Fahrzeugdrehratenschwellwert von 0,25 rad/s überschritten wird. Der Fachmann kann im konkreten Fall den Fahrzeugdrehratenschwellwert auch anders festlegen.

Im Schritt 36 erfolgt erfindungsgemäss eine dynamische Anpassung des Werts für die Messunsicherheit R der aktuellen UWB Distanzmessung und des Werts für das Prozessrauschen Q des aktuellen odometrischen Fahrstatus je nach der in Schritt 35 festgestellten Position, bevor die Fusion der odometrischen Daten und der UWB Distanzmessdaten in einem Kalman Filter (bevorzugt einem Unscented (oder Extended) Kalman Filter) erfolgt.

Ausgangslage für die dynamische Anpassung dieser Werte ist deren vom Fachmann für den konkreten Fall bestimmten Grundwert. Bei der Simulation für den Mähroboter gemäss Figur 1, eingesetzt zum Mähen eines Fussballfeldes 2, sind hochpräzise UWB Anker vorgesehen, wie sie zum Zeitpunkt der vorliegenden Anmeldung erhältlich sind, also beispielsweise einen Wert für die Messunsicherheit R von 3,5 * 10$^{-3}$ m$^2$ aufweisen (Varianz der Streuung der Messdaten aus dem Datenblatt der UWB Anker, s. oben zum Schritt 33).

Für den Grundwert des Prozessrauschens Q des Mähroboters 1 im Fussballfeld 2 (Figuren 1 und 2) gilt, dass es das Mass an Vertrauen in das verwendete odometrische Systemmodell darstellt, das beispielsweise durch die folgenden Gleichungen gegeben ist:

$$f\left(\dot{\theta}\right) = \frac{r_{Nenn}}{B} \cdot (\omega_r - \omega_l)$$

$$f(\dot{r}_x) = \cos(\theta) \cdot \frac{r_{Nenn}}{2} \cdot (\omega_r + \omega_l)$$

$$f(\dot{r}_y) = \sin(\theta) \cdot \frac{r_{Nenn}}{2} \cdot (\omega_r + \omega_l)$$

wo B der Abstand der Antriebsräder 15,15', r$_{nenn}$ deren

Radius und ω die Winkelgeschwindigkeit der Räder 15,15' ist.

Für die Ausrichtung θ bildet das Prozessrauschen Q bei einem Mähroboter 1 gemäss Figur 2 unter anderem die Abweichung durch die Ausschwenkbewegung der Castor-Wheel Aufhängung (Schleppräder) des hier verwendeten Mähroboters 1 ab. Bei der Position bildet es z.B. den Fehler durch minimalen Traktionsverlust bzw. Schlupf der Antriebsräder 15,15' ab.

Der Grundwert für das Prozessrauschen Q ergibt sich bevorzugt durch praktische Tests, die der Fachmann im konkreten Fall vornehmen kann. Für die Ausrichtung im konkreten Fall wird z.B. ein unrealistisch kleiner Wert (z.B. $10^{-15}$ rad$^2$/s$^2$) gewählt, während einem Testbetrieb des Fahrzeugs bzw. Mähroboters 1 der Verlauf der Hauptdiagonale der Kovarianzmatrix (aus den Messdaten mit den Abweichungen) aufgezeichnet und ausgewertet, welches der minimale Wert ist, welcher diese erreicht. Ein sinnvoller Wert kann durch den Fachmann im konkreten Fall etwas höher angesetzt werden, z.B. 1.1 Mal den gemessen Minimalwert. Weiter kann auch die Minimierung des RMS Wertes der Innovationssequenz (Systemvorhersage minus Messung) über eine bestimmte Zeit, oder in einem Betriebsmodus (Geradeausfahren, Kurvenfahrt und verschiedene Geschwindigkeiten) angestrebt werden, falls genaue Messungen möglich sind. Diese Methoden für die praktischen Tests zum Bestimmen des Grundwerts eines Prozessrauschens sind dem Fachmann grundsätzlich bekannt. Neben der Ausrichtung kann für die Geschwindigkeit analog vorgegangen werden. Damit kann der Fachmann im konkreten Fall den Grundwert für das Prozessrauschen Q bestimmen.

Die dynamische Anpassung erfolgt nun erfindungsgemäss dadurch, dass die Grundwerte für die Messunsicherheit R und das Prozessrauschen Q nicht über die ganze Länge des vorbestimmten Pfads beibehalten, sondern am aktuellen Ort auf dem vorbestimmten Pfad 3 nach dessen dort vorhandenen Eigenschaften belassen oder verändert werden. Bevorzugt ist eine Eigenschaft dadurch gegeben, ob der vorbestimmte Pfad am aktuellen Standort gerade oder gekrümmt ausgebildet ist.

Entsprechend wird beispielsweise auf einem geraden Abschnitt 4,5 des vorbestimmten Pfads 3 (s. Figur 1) entweder der Wert für die Messunsicherheit R höher, beispielsweise wie oben erwähnt 1,1mal höher, d.h. auf 3,55 * $10^{-3}$ m$^2$ angesetzt. Das bedeutet, dass für die im nachfolgenden Schritt 37 erfolgende Fusion der Odometriedaten mit den UWB Distanzmessdaten das Vertrauen in die UWB Messdaten und damit deren Gewichtung in der Fusion verringert wird: ein höherer Wert für die Messunsicherheit R bedeutet die Annahme einer grösseren Varianz der Daten aus der UWB Distanzmessung, damit einer grösseren, durchschnittlich zu erwartenden Abweichung von der realen Messdistanz (dem Erwartungswert).

Alternativ kann für den geraden Abschnitt 4,5 im konkreten Fall auch der Wert für das Prozessrauschen Q (beispielsweise ebenfalls um 10%) verringert werden: dann wird eine kleinere Varianz und damit ein kleinerer, durchschnittlicher Fehler in den Odometriedaten angenommen und damit ein kleinerer durchschnittlicher Fehler in der aus den Odometriedaten berechneten Geschwindigkeit und Ausrichtung des Mähroboters 1. Ebenso ist es möglich, auch beide Werte Q und R zu verändern - jedoch stets so, dass im Ergebnis auf einem geraden Abschnitt 4,5 die Odometriedaten bei der Fusion höher gewichtet sind. Der Fachmann kann im konkreten Fall den Betrag der Änderung der Werte für das Prozessrauschen P und die Messunsicherheit R beispielsweise in Schritten von 10%-Änderungen in Verbindung mit entsprechenden Tests leicht bestimmen.

Es ergibt sich, dass bei einem Standort mit der Eigenschaft eines geraden Abschnitts (4,5) oder der Eigenschaft einer erhöhten Griffigkeit des Untergrunds der Wert für die Grösse der Messunsicherheit R gegenüber dem vorbestimmten Wert vergrössert wird und/oder der Wert für die Grösse des Prozessrauschens Q gegenüber dem vorbestimmten Wert verkleinert wird.

Weiter ergibt sich ein Fahrzeug 1 bei welchem bevorzugt die Steuerung weiter ausgebildet ist, bei einem Standort auf einem geraden 5 Abschnitt den Wert für die Grösse der Messunsicherheit R gegenüber dem vorbestimmten Grundwert zu vergrössern und/oder den Wert für die Grösse des Prozessrauschens Q gegenüber dem vorbestimmten Grundwert zu verkleinern.

Umgekehrt wird in einer Kurve 6 des vorbestimmten Pfads 3 (Figur 1) der Wert für das Prozessrauschen Q erhöht, damit ein grösserer durchschnittlicher Fehler angenommen und so bei der Fusion die Gewichtung der Odometriedaten verringert. Wiederum kann alternativ der Wert für die Messunsicherheit R verringert oder es können beide Werte Q und R verändert werden, jedoch stets so, dass im Ergebnis in einer Kurve 6 die UWB Distanzmessdaten bei der Fusion höher gewichtet sind.

Es ergibt sich, dass bei einem Standort mit der Eigenschaft eines gekrümmten Abschnitts 6 und/oder der Eigenschaft einer reduzierten Griffigkeit des Untergrunds der Wert für die Grösse der Messunsicherheit R gegenüber dem vorbestimmten Wert verkleinert wird und/oder der Wert für die Grösse des Prozessrauschens Q gegenüber dem vorbestimmten Wert vergrössert wird.

Dabei ist weiter die Steuerung bevorzugt ausgebildet, bei einem Standort auf einem gekrümmten Abschnitt 6 den Wert für die Grösse der Messunsicherheit R gegenüber dem vorbestimmten Grundwert zu verkleinern und/oder den Wert für die Grösse des Prozessrauschens Q gegenüber dem vorbestimmten Grundwert zu vergrössern.

Im Schritt 37 wird nach der dynamischen Anpassung der Werte für die Messunsicherheit R und das Prozessrauschen Q bevorzugt durch einen Unscented Kalman Filter eine Fusion der Odometriedaten und der UWB Distanzmessdaten erzeugt. Wie eingangs erwähnt, ist der Algorithmus des Kalman Filters als solcher bekannt, ebenso der im Fall von nichtlinearen Funktionen (beispielsweise die Funktion der Ausrichtung $f(\dot{\theta})$) zu bevorzugende Unscented Kalmen Filter. Dieser Algorithmus dient hier dazu, auf Grund eines früheren Standorts aus verschiedenen Messungen, die von diesem ausgehend den aktuellen Standort bestimmen, durch die Fusion der Messwerte den aktuellen Standort präziser zu bestimmen, als es auf Grund der einzelnen (und voneinander unabhängigen) Messungen möglich ist. Zudem kann diese Fusion durch den Kalman Filter auch dann vorgenommen werden, wenn alle Grössen (d.h. der frühere Standort und die aus den Messungen erhaltenen Messwerte) als statistische Grössen mit einem Erwartungswert und der dazu gehörenden (statischen) Varianz vorliegen. Das Resultat ist dann ein aktueller Standort mit einem Erwartungswert und einer Varianz, die kleiner ist als diejenige der einzelnen Messwerte. Es sei an dieser Stelle angemerkt, dass an Stelle eines Unscented Kalman Filters auch beispielsweise ein Extended Kalman Filter verwendet werden kann.

Diese Fusion ergibt damit hier einen angenommenen Standort und eine angenommene Ausrichtung des Mähroboters 1 mit einer geringeren Varianz als es bei der Messunsicherheit R und das Prozessrauschen Q der Fall ist. Der durchschnittliche Fehler bei dem durch die Fusion angenommenen Standort und der angenommenen Ausrichtung ist kleiner, als er es ohne Fusion der durch die Odometrie oder die UWB Distanzmessung erhaltenen Werte wäre. Auf Grund der erfindungsgemässen dynamischen Anpassung ist das Resultat der Fusion für den Zweck der Navigation des sich bewegenden Fahrzeugs verbessert.

Im Schritt 38 wird auf Grund der in Schritt 37, auf Grund der in Schritt 36 dynamisch angepassten Werte erfindungsgemäss präziser berechneten Position durch den Trajektorienregler die Kurskorrektur berechnet, damit der Mähroboter 1 auf dem vorbestimmten Pfad 3 bleibt. Der Trajektorienregler besteht aus zwei Komponenten, einem Regler für die Ausrichtung (Lenkung) des Fahrzeugs und einem Regler für die Fahrzeuggeschwindigkeit. Die Trajektorie, d.h. der vorbestimmte Pfad 3, besteht aus verschiedenen Punkten P, welche Informationen über die Sollwerte für die Ausrichtung, die Position des Mähroboters, dessen Geschwindigkeit und im Fall des Mähroboters, einen Fahrzeugmodus wie aktiviertes Mähen etc. beinhalten.

Der Regler für die Ausrichtung des Fahrzeugs wird bevorzugt wie folgt ausgebildet:

 1. Suchen des Trajektorienpunktes $P_k$ mit dem geringsten Abstand zur momentanen, im Schritt 37 (oder auch im Schritt 34) ermittelten Position des Mähroboters 1,

 2. Berechnung des Cross Track Errors, d.h. der Distanz von der momentanen Position des Mähroboters 1 zum Punkt $P_k$.

 3. Berechnung der Abweichung von der momentanen Ausrichtung des Fahrzeugs zur Sollausrichtung (diese ist in der Trajektorie gespeichert).

 4. Berechnung der Änderung der Sollausrichtung um den nächsten Punkt auf der Trajektorie (d.h. die Ausrichtung im nächsten Punkt $P_{k+1}$ minus $P_k$).

 6. Berechnung des Stellwertes für die Fahrzeugdrehrate $\dot{\theta}$.

Solche Trajektorienregler sind dem Fachmann grundsätzlich bekannt, der Fachmann kann im konkreten Fall einen geeigneten Trajektorenregler vorsehen.

Die Stellgrösse für die Fahrzeugdrehrate wird Drehbeschleunigungs- und (Dreh)Rucklimitiert und in eine Drehzahldifferenz der beiden Antriebsräder umgerechnet. Diese wird an den Regler für die Motorendrehzahl weitergegeben.

Im Schritt 39 entscheidet die Steuerung 22, ob das Ende des vorbestimmten Pfads 3 erreicht ist oder nicht. Wenn nein, wird der Zyklus durch einen Rücksprung zu Schritt 31 erneut abgearbeitet, wenn ja die Navigation abgebrochen.

Die erfindungsgemässe dynamische Anpassung der Werte für das Prozessrauschen Q und die Messunsicherheit R erlaubt wie erwähnt eine präzisere Navigation, als es bei statischen Werten der Fall ist, d.h. bei einem konventionell angesetzten Kalman Filter. Nach den Erkenntnissen der Anmelderin wird durch die dynamische Anpassung beispielsweise ein vermehrter Schlupf der Antriebsräder 15,15' in der Kurvenfahrt künstlich, aber antizipierend berücksichtigt, so dass die Navigation im Ergebnis präziser ausfällt. Ein weiterer Aspekt der dynamischen Anpassung ist, dass während der Kurskorrekturen die Trajektorie, d.h. der vorbestimmte Pfad 3, weniger gekreuzt wird, und sich gemäss der oben erwähnten Simulation die Anzahl der Kreuzungen um gegen 50% verringern lässt. Weniger heftige Korrekturen führen zu einer präziseren Navigation mit einem mehr gestreckten realen Pfad des erfindungsgemässen Fahrzeugs, was sich auch auf die Optik eines bearbeiteten Gebiets auswirkt.

Der Natur der Sache nach ist die Präzision der Navigation auch von der Geschwindigkeit des Fahrzeugs abhängig, da bei geringerer Geschwindigkeit in einem Abschnitt des vorbestimmten Pfads mehr Messungen und damit auch mehr Korrekturen durch den Trajektorienregler vorgenommen werden können (umgekehrt bei höherer Geschwindigkeit). Über die gestellte Aufgabe hinaus kann damit gemäss der vorliegenden Erfindung mit Hilfe der dynamischen Anpassung der Werte für das Prozessrauschen Q und der Messunsicherheit R die Geschwindigkeit eines navigierenden Roboters erhöht werden, ohne dass dessen Präzision gegenüber einer konventionellen Navigation ohne dynamische Anpassung verringert ist.

Bevorzugt kann die dynamische Anpassung nicht nur im Hinblick auf das Vorliegen eines geraden Abschnitts oder einer Kurve, sondern auch in Abhängigkeit des Krümmungsradius einer Kurve erfolgen, beispielsweise derart, dass die Anpassung mit kleiner werdendem Krümmungsradius starker ausfällt, d.h. die entsprechenden Werte für das Prozessrauschen Q und der Messunsicherheit R stärker verändert werden. Ebenso können die Eigenschaften des vorbestimmten Pfads nicht nur auf dessen Geometrie, sondern auch auf andere Eigenschaften wie den Untergrund selbst bezogen werden, so dass beispielsweise bei einem vermehrt rutschigen bzw. weniger griffigen Untergrund die dynamische Anpassung analog zu einer Kurve vorgenommen und bei einem vermehrt griffigen Untergrund die dynamische Anpassung analog zu einer Geraden vorgenommen wird. Die Steuerung 22 kann der Fachmann dann entsprechend ausbilden. Es ergibt sich damit, dass bevorzugt eine hohe Traktion zu einem höheren Vertrauen in die Odometrie führt (kleinerer Wert für das Prozessrauschen) und umgekehrt eine verminderte Traktion zu einem höheren Vertrauen in die Distanzmessung (kleinerer Wert für die Messunsicherheit R).

Zusammenfassend ist es erfindungsgemäss so, dass das Prozessrauschen Q und die Messunsicherheit R Verarbeitungswerte sind für die Verarbeitung der Odometriedaten und der Daten der Distanzmessung im Kalman Filter. Diesen Verarbeitungswerten wird ein vorbestimmter Grundwert zugeordnet, betreffend die Bestimmung des Grundwerts für das Prozessrauschen Q s. oben die Beschreibung zum Schritt 33 (beispielsweise Tests). Betreffend die Bestimmung des Grundwerts für die Messunsicherheit R s. oben die Beschreibung zum Schritt 33 (Datenblatt bzw. Messungen).

Durch die dynamische Anpassung gemäss Schritt 36 wird dann wenigstens einer der Verarbeitungswerte (Prozessrauschen Q bzw. Messunsicherheit R) gegenüber seinem vorbestimmten Grundwert verändert, wobei die Veränderung je nach den Eigenschaften des vorbestimmten Pfads am bestimmten, aktuellen Standort erfolgt.

Es ergibt sich damit erfindungsgemäss ein Verfahren, bei welchem bevorzugt Zustandsbeobachter Z einen Kalman Filter aufweist oder der Zustandsbeobachter Z ein Kalman Filter ist. Dabei sind bevorzugt die Verarbeitungswerte vorbestimmte Grundwerte für die Grössen für ein Prozessrauschen Q der Odometriedaten und eine Messunsicherheit R der Daten aus der Distanzmessung, wobei wenigstens einer der Werte für die Grössen für das Prozessrauschen Q und die Messunsicherheit R gegenüber den vorbestimmten Grundwerten verändert werden, je nach Eigenschaften des vorbestimmten Pfads am bestimmten, aktuellen Standort.

Weiter ergibt sich ein Fahrzeug 1 mit einer Steuerung 22, die bevorzugt einen Zustandsbeobachter umfasst, der einen Kalman-Filter aufweist oder ein Kalman Filter ist. Dabei sind weiter bevorzugt die vorbestimmten Grundwerte für die Verarbeitung der Odometriedaten und der Daten aus der Distanzmessung Grössen für das Prozessrauschen Q und die Messunsicherheit R des Kalman Filters.

In einer anderen Ausführungsform der vorliegenden Erfindung wird an Stelle eines Kalman-Filters ein dem Fachmann an sich bekannter Luenberger Beobachter verwendet. Ein Luenberger Beobachter stellt, wie der Kalman Filter auch, einen Zusstandsbeobachter dar (der oft einfach als Beobachter bezeichnet wird). Der Luenberger-Beobachter und der Kalman Filter haben dieselbe mathematische Struktur, lediglich der Wert der Rückführmatrix wird anders berechnet.

Wird nun ein Luenberger Beobachter eingesetzt, werden erfindungsgemäss ebenfalls Verarbeitungswerte mit jeweils einem vorbestimmten Grundwert A,B für die Verarbeitung der Odometriedaten und der Daten der Distanzmessung verwendet. Diese Grundwerte A,B dienen dann der Filterung der Odometriedaten bzw. der Distanzmessdaten im Luenberger Beobachter.

Analog zum Schritt 36 erfolgt dann eine dynamische Anpassung der Verarbeitungswerte d.h. der vorbestimmten Grössen A,B so, dass diese gegenüber den vorbestimmten Grundwerten verändert werden, je nach Eigenschaften des vorbestimmten Pfads am bestimmten, aktuellen Standort.

Analog zum Schritt 37 wird dann an Stelle des Kalman Filters in einer Ausführungsform des erfindungsgemässen Verfahrens ein Zustandsbeobachter vorgesehen, der einen Luenberger Beobachter aufweist. Weiter sind dann bevorzugt im Luenberger-Beobachter die Verarbeitungswerte vorbestimmte Grössen A,B sind für die jeweilige Filterung der Daten aus der Odometrie und die Daten aus der Distanzmessung, wobei wenigstens einer der Werte für die Grössen A, B gegenüber den vorbestimmten Grundwerten verändert werden, je nach Eigenschaften des vorbestimmten Pfads am bestimmten, aktuellen Standort.

Entsprechend ergibt sich ein Fahrzeug 1, bei welchem der Zustandsbeobachter einen Luenberger Beobachter aufweist. Dann sind weiter bevorzugt die vorbestimmten Grundwerte Grössen für die jeweilige Filterung der Daten A aus der Odometrie und die Daten B aus der Distanzmessung.

Figur 4 zeigt ein dem Fachmann als solches bekanntes Schema einer Regelstrecke x mit einem Zustandsbeobachter Z, wobei hier die Regelstrecke x einem Fahrzeug 1 (Figur 2) entspricht und der Zustandsbeobachter Z einem Teil der Steuerung 22 des Fahrzeugs (Figur 2). Das Kommando u (z.B. Steuersignale der Steuerung 22 für die Antriebsmotore der Räder 15,15' des Fahrzeugs 1) wird in der Regelstrecke x ausgeführt (das Fahrzeug 1 fährt entlang dem vorbestimmten Pfad 3, Figur 1), was zum Resultat y (der Position des Fahrzeugs 1) führt. Der Zustandsbeobachter Z enthält ein mathematisches Modell x^ des Fahrzeugs 1, welches dasselbe Kommando u erhält wie die Regelstrecke x, und so das Resultat y^ (die Position des Fahrzeugs 1) mathematisch schätzen kann. Zwischen der wahren, hier durch Sensoren der Odometrie und durch beispielsweise die UWB-Anker gemessenen Position besteht entsprechend der Unterschied Δ, aus dem eine Rückführmatrix l für das Modell x^ generiert wird, so dass dieses das Resultat y (Position des Fahrzeugs 1) verbessert schätzen kann. Dadurch ist das Modell x^ in der Lage, eine Rückführmatrix -K für das Kommando u zu generieren, d.h. hier die Steuersignale für die Motore 15,15' für einen präzisen Kurs auf dem vorbestimmten Pfad 3 (Figur 1) geeignet zu modifizieren.

Wie oben erwähnt, kann nun der Zustandsbeobachter als Kalman - Filter oder auch als Luenberger Beobachter aufgebaut sein oder einen solchen aufweisen. Ein Kalman - Filter besitzt den Vorteil, dass er das Rauschen der Sensoren berücksichtigt und mit kurzen Unterbrüchen der Sensordaten durch Schätzwerte gut umgehen kann. Nachteilig ist dem Kalman - Filter jedoch die vergleichsweise trägere Korrektur: im Verhältnis zu anderen Algorithmen ist die Dynamik recht tief. Der Luenberger Beobachters wiederum erlaubt dagegen eine hohe Dynamik, welche über die sogenannte Polplatzierung gewählt werden kann, was bei einem komplizierten vorbestimmten Pfad 3 und grösseren Geschwindigkeiten des Fahrzeugs 1 vorteilhaft ist. Allerdings ist dem Luenberger Beobachter nachteilig, dass das Sensorrauschen nicht geglättet wird und Unterbrüche der Sensorwerte Probleme bereiten. Entsprechend kann der Fachmann für den konkreten Fall zur Fusion von Odometriedaten und den Daten zum Fahrzeugstandort einen Kalman - Filter oder einen Luenberger Beobachter vorsehen - denkbar ist auch, je nach Streckenabschnitt bzw. Abschnitt des vorbestimmten Pfads 3 alternativ einen Zustandsbeobachter mit einem Kalman - Filter oder mit einem Luenberger Beobachter vorzusehen.

Es ergibt sich damit ein Verfahren, bei welchem bevorzugt bei einem Standort mit der Eigenschaft eines geraden Abschnitts 4 oder der Eigenschaft einer erhöhten Griffigkeit des Untergrunds der Wert Verarbeitungswert für die Daten der Distanzmessung, insbesondere der Wert für die Grösse der Messunsicherheit R, oder die Grösse B für die Filterung der Daten aus der Distanzmessung gegenüber dem vorbestimmten Wert vergrössert wird und/oder der Wert für die Grösse des Prozessrauschens Q, oder die Grösse A für die Filterung der Daten aus der Odometrie gegenüber dem vorbestimmten Wert verkleinert wird. Entsprechend ist bei einem Fahrzeug 1 die Steuerung bevorzugt ausgebildet, bei einem Standort auf einem geraden 5 Abschnitt den Wert Verarbeitungswert für die Daten der Distanzmessung, insbesondere den Wert für die Grösse der Messunsicherheit R, oder die Grösse B für die Filterung der Daten aus der Distanzmessung, gegenüber dem vorbestimmten Grundwert zu vergrössern und/oder den Wert für die Grösse des Prozessrauschens Q, oder die Grösse A für die Filterung der Daten aus der Odometrie gegenüber dem vorbestimmten Grundwert zu verkleinern.

Umgekehrt ergibt sich ein Verfahren, bei welchem bevorzugt bei einem Standort mit der Eigenschaft eines gekrümmten Abschnitts 6 und/oder der Eigenschaft einer reduzierter Griffigkeit des Untergrunds der Verarbeitungswert für die Daten der Distanzmessung, insbesondere der Wert für die Grösse der Messunsicherheit R, oder die Grösse B für die Filterung der Daten aus der Distanzmessung gegenüber dem vorbestimmten Wert verkleinert wird und/oder der Wert für die Grösse des Prozessrauschens Q, oder die Grösse A für die Filterung der Daten aus der Odometrie gegenüber dem vorbestimmten Wert vergrössert wird. Bei einem Fahrzeug 1 ist dann bevorzugt die Steuerung ausgebildet, bei einem Standort auf einem geraden 5 Abschnitt den Verarbeitungswert für die Daten der Distanzmessung, insbesondere den Wert für die Grösse der Messunsicherheit R, oder die Grösse B für die Filterung der Daten aus der Distanzmessung, gegenüber dem vorbestimmten Grundwert zu vergrössern und/oder den Wert für die Grösse des Prozessrauschens Q, oder die Grösse A für die Filterung der Daten aus der Odometrie gegenüber dem vorbestimmten Grundwert zu verkleinern.

Der vorbestimmte Pfad 3 (Figur 1) kann neben der Krümmung oder Griffigkeit viele weitere Eigenschaften aufweisen, die im konkreten Fall vom Fachmann für eine präzise Navigation als relevant eingestuft werden. Dabei kann sich eine Schwelle für die Relevanz ergeben, es können aber auch die Verarbeitungswerte in einer Abhängigkeit (proportional, nicht proportional, schrittweise) von der jeweiligen Eigenschaft verändert werden. Es ergibt sich damit bevorzugt ein Verfahren, wobei wenigstens einer der Verarbeitungswerte (Kalman Filter oder Luenberger Beobachter, s. die Beschreibung unten), insbesondere für die Grössen für das Prozessrauschen Q und die Messunsicherheit R oder die Grössen A,B für die jeweilige Filterung der Daten aus der Odometrie und die Daten aus der Distanzmessung gegenüber den vorbestimmten Grundwerten in Abhängigkeit von der Intensität der Eigenschaften verändert werden.

Darüber hinaus kann, wie oben erwähnt, der Fachmann natürlich auch einen Zustandsbeobachter mit einem anderen, geeigneten Algorithmus vorsehen, der die Odometriedaten und die Daten zum Fahrzeugstandort fusioniert, dabei erfindungsgemäss wenigstens einer der Verarbeitungswerte für die Verarbeitung der Odometriedaten bzw. der Daten der Distanzmessung verändern, je nach Eigenschaften des vorbestimmten Pfads am bestimmten, aktuellen Standort, dynamisch anpassen.

Es ergibt sich zusammenfassend ein Verfahren zur Bewegung eines Fahrzeugs (1) entlang eines vorbestimmten Pfads (3), wobei zyklisch ein aktueller Standort auf dem vorbestimmten Pfad (3) sowie eine an diesem Standort vorhandene Fahrtrichtung (θ) des Fahrzeugs (1) durch die Fusion von Odometriedaten des Roboters (1) und Daten zum Fahrzeugstandort aus einer drahtlosen Distanzmessung durch einen Zustandsbeobachter Z bestimmt und danach aus dem erhaltenen Standort mit der erhaltenen Fahrtrichtung in einem Trajektorenregler eine Kurskorrektur für das Fahrzeug (1) bestimmt wird, dadurch gekennzeichnet, dass Verarbeitungswerte mit jeweils einem vorbestimmten Grundwert für einerseits der Verarbeitung der Odometriedaten und andererseits der Daten der Distanzmessung im Zustandsbeobachter

Z vorgesehen werden, und wenigstens einer der Verarbeitungswerte gegenüber seinem vorbestimmten Grundwert verändert wird, je nach Eigenschaften des vorbestimmten Pfads am bestimmten, aktuellen Standort, so dass eine präzise Navigation erreicht wird.

Bei einer bevorzugten Ausführungsform ergibt sich ein Verfahren zur Bewegung eines Fahrzeugs 1 entlang eines vorbestimmten Pfads 3, wobei zyklisch ein aktueller Standort auf dem vorbestimmten Pfad (3) sowie eine an diesem Standort vorhandene Fahrtrichtung (θ) des Fahrzeugs (1) durch die Fusion von Odometriedaten des Roboters (1) und Daten zum Roboterstandort aus einer drahtlosen Distanzmessung durch einen Kalman-Filter bestimmt und danach aus dem erhaltenen Standort mit der erhaltenen Fahrtrichtung in einem Trajektorenregler eine Kurskorrektur für das Fahrzeug (1) bestimmt wird, und wobei im Kalman-Filter vorbestimmte Grundwerte für die Grössen für ein Prozessrauschen Q der Odometriedaten und eine Messunsicherheit R der Daten aus der Distanzmessung verwendet werden, dadurch gekennzeichnet, dass wenigstens einer der Werte für die Grössen für das Prozessrauschen Q und die Messunsicherheit R gegenüber den vorbestimmten Grundwerten verändert werden, je nach Eigenschaften des vorbestimmten Pfads am bestimmten, aktuellen Standort, so dass eine präzisere Navigation erreicht wird.

Weitere ergibt sich ein Fahrzeug (1) mit einer Antriebskonfiguration zur Fortbewegung auf dem Untergrund, Sensoren (21) für Odometriedaten aus der Bewegung von Rädern (15,15'), einer Lenkanordnung für die Änderung der Fortbewegungsrichtung des Roboters, einer Steuerung (22) für die Lenkanordnung und einer Empfangseinheit (19') für die Daten von Sendern für eine drahtlose Distanzmessung, wobei die Steuerung (22) ausgebildet ist, aus den Daten der Distanzmessung zyklisch eine Distanz des Fahrzeugs (1) zu einem Distanzmesspunkt zu bestimmen und durch einen Zustandsbeobachter Z mit den Odometriedaten zu fusionieren und dadurch einen aktuellen Standort und eine Fahrtrichtung (θ) des Fahrzeugs (1) zu bestimmen, dadurch gekennzeichnet, dass die Steuerung (22) weiter ausgebildet ist, vorbestimmte Grundwerte für die Verarbeitung der Odometriedaten und der Daten der Distanzmessung des Zustandsbeobachters Z zu verändern, je nach den Eigenschaften des vorbestimmten Pfads am bestimmten, aktuellen Standort, so dass eine Präzise Navigation erreicht wird.

Bevorzugt ist eine Eigenschaft dadurch gegeben, ob der vorbestimmte Pfad am aktuellen Standort gerade oder gekrümmt ausgebildet ist.

Bevorzugt ergibt sich ein Fahrzeug 1 mit einer Antriebskonfiguration zur Fortbewegung auf dem Untergrund, Sensoren (21) für Odometriedaten aus der Bewegung von Rädern (15,15'), einer Lenkanordnung für die Änderung der Fortbewegungsrichtung des Roboters, einer Steuerung (22) für die Lenkanordnung und einer Empfangseinheit (19') für die Daten von Sendern für eine drahtlose Distanzmessung dadurch gekennzeichnet, die Steuerung (22) ausgebildet ist, aus den Daten der Distanzmessung zyklisch eine Distanz des Roboters (1) zu einem Distanzmesspunkt zu bestimmen und durch einen Kalman-Filter mit den Odometriedaten zu fusionieren und dadurch einen aktuellen Standort und eine Fahrtrichtung (θ) des Roboters (1) zu bestimmen, dadurch gekennzeichnet, dass die Steuerung (22) weiter ausgebildet ist, vorbestimmte Grundwerte für die Grössen für das Prozessrauschen Q und die Messunsicherheit R des Kalman-Filters zu verändern, je nach den Eigenschaften des vorbestimmten Pfads am bestimmten, aktuellen Standort, so dass eine präzisere Navigation erreicht wird.

**Patentansprüche**

1. Verfahren zur Bewegung eines Fahrzeugs (1) entlang eines vorbestimmten Pfads (3), wobei zyklisch ein aktueller Standort auf dem vorbestimmten Pfad (3) sowie eine an diesem Standort vorhandene Fahrtrichtung (θ) des Fahrzeugs (1) durch die Fusion von Odometriedaten des Fahrzeugs (1) und Daten zum Fahrzeugstandort aus einer drahtlosen Distanzmessung durch einen Zustandsbeobacher (Z) bestimmt und danach aus dem erhaltenen Standort mit der erhaltenen Fahrtrichtung in einem Trajektorenregler eine Kurskorrektur für das Fahrzeug (1) bestimmt wird, **dadurch gekennzeichnet, dass** Verarbeitungswerte mit jeweils einem vorbestimmten Grundwert für einerseits die Verarbeitung der Odometriedaten und andererseits der Daten der Distanzmessung im Zustandsbeobachter (Z) vorgesehen werden, und wenigstens einer der Verarbeitungswerte gegenüber seinem vorbestimmten Grundwert verändert wird, je nach Eigenschaften des vorbestimmten Pfads am bestimmten, aktuellen Standort, so dass eine präzise Navigation erreicht wird.

2. Verfahren nach Anspruch 1, wobei der Zustandsbeobachter (Z) einen Kalman Filter aufweist oder der Zustandsbeobachter (Z) ein Kalman Filter ist.

3. Verfahren nach Anspruch 2, wobei die Verarbeitungswerte vorbestimmte Grundwerte sind für die Grössen für ein Prozessrauschen Q der Odometriedaten und eine Messunsicherheit R der Daten aus der Distanzmessung, wobei wenigstens einer der Werte für die Grössen für das Prozessrauschen Q und die Messunsicherheit R gegenüber den vorbestimmten Grundwerten verändert werden, je nach Eigenschaften des vorbestimmten Pfads am bestimmten, aktuellen Standort.

4. Verfahren nach Anspruch 1, wobei der Zustandsbeobachter einen Luenberger Beobachter aufweist.

5. Verfahren nach Anspruch 4, wobei im Luenberger-Beobachter die Verarbeitungswerte vorbestimmte Grössen A,B sind für die jeweilige Filterung der Daten aus der Odometrie und die Daten aus der Distanzmessung, wobei wenigstens einer der Werte für die Grössen A, B gegenüber den vorbestimmten Grundwerten verändert werden, je nach Eigenschaften des vorbestimmten Pfads am bestimmten, aktuellen Standort.

6. Verfahren nach Anspruch 1, wobei eine Eigenschaft dadurch gegeben ist, ob der vorbestimmte Pfad am aktuellen Standort gerade oder gekrümmt ausgebildet ist.

7. Verfahren nach Anspruch 2, wobei als Kalman-Filter ein Unscented oder ein Extended Kalman-Filter verwendet wird.

8. Verfahren nach Anspruch 1, wobei bei einem Standort mit der Eigenschaft eines geraden Abschnitts (4,5) oder der Eigenschaft einer erhöhten Griffigkeit des Untergrunds der Verarbeitungswert für die Daten der Distanzmessung, insbesondere der Wert für die Grösse der Messunsicherheit R, oder die Grösse B für die Filterung der Daten aus der Distanzmessung gegenüber dem vorbestimmten Wert vergrössert wird und/oder der Wert für die Grösse des Prozessrauschens Q, oder die Grösse A für die Filterung der Daten aus der Odometrie gegenüber dem vorbestimmten Wert verkleinert wird.

9. Verfahren nach Anspruch 1, wobei bei einem Standort mit der Eigenschaft eines gekrümmten Abschnitts (6) und/oder der Eigenschaft einer reduzierter Griffigkeit des Untergrunds der Verarbeitungswert für die Daten der Distanzmessung, insbesondere der Wert für die Grösse der Messunsicherheit R, oder die Grösse B für die Filterung der Daten aus der Distanzmessung gegenüber dem vorbestimmten Wert verkleinert wird und/oder der Wert für die Grösse des Prozessrauschens Q, oder die Grösse A für die Filterung der Daten aus der Odometrie gegenüber dem vorbestimmten Wert vergrössert wird.

10. Verfahren nach Anspruch 1, wobei wenigstens einer der Verarbeitungswerte, insbesondere für die Grössen für das Prozessrauschen Q und die Messunsicherheit R oder die Grössen A,B für die jeweilige Filterung der Daten aus der Odometrie und die Daten aus der Distanzmessung gegenüber den vorbestimmten Grundwerten in Abhängigkeit von der Intensität der Eigenschaften verändert werden.

11. Verfahren nach Anspruch 1, wobei das Fahrzeug ein Roboter ist.

12. Fahrzeug (1) mit einer Antriebskonfiguration zur Fortbewegung auf dem Untergrund, Sensoren (21) für Odometriedaten aus der Bewegung von Rädern (15,15'), einer Lenkanordnung für die Änderung der Fortbewegungsrichtung des Fahrzeugs, einer Steuerung (22) für die Lenkanordnung und einer Empfangseinheit (19') für die Daten von Sendern für eine drahtlose Distanzmessung **dadurch gekennzeichnet**, die Steuerung (22) ausgebildet ist, aus den Daten der Distanzmessung zyklisch eine Distanz des Fahrzeugs (1) zu einem Distanzmesspunkt zu bestimmen und durch einen Zustandsbeobachter (Z) mit den Odometriedaten zu fusionieren und dadurch einen aktuellen Standort und eine Fahrtrichtung ($\theta$) des Fahrzeugs (1) zu bestimmen, **dadurch gekennzeichnet, dass** die Steuerung (22) weiter ausgebildet ist, vorbestimmte Grundwerte für die Verarbeitung der Odometriedaten und der Daten der Distanzmessung des Zustandsbeobachters (Z) zu verändern, je nach den Eigenschaften des vorbestimmten Pfads am bestimmten, aktuellen Standort, so dass eine präzise Navigation erreicht wird.

13. Fahrzeug (1) nach Anspruch 12, wobei der Zustandsbeobachter (Z) einen Kalman-Filter aufweist oder ein Kalman Filter ist.

14. Fahrzeug (1) nach Anspruch 13, wobei die vorbestimmten Grundwerte für die Verarbeitung der Odometriedaten und der Daten aus der Distanzmessung Grössen für das Prozessrauschen Q und die Messunsicherheit R des Kalman Filters sind.

15. Fahrzeug (1) nach Anspruch 12, wobei der Zustandsbeobachter einen Luenberger Beobachter aufweist.

16. Fahrzeug (1) nach Anspruch 15, wobei die vorbestimmten Grössen Grössen für die jeweilige Filterung der Daten A aus der Odometrie und die Daten B aus der Distanzmessung sind.

17. Fahrzeug nach Anspruch 12, wobei eine Eigenschaft dadurch gegeben ist, ob der vorbestimmte Pfad am aktuellen Standort gerade oder gekrümmt ausgebildet ist.

18. Fahrzeug (1) nach Anspruch 12, wobei die Steuerung weiter ausgebildet ist, bei einem Standort auf einem geraden (5) Abschnitt den Verarbeitungswert für die Daten der Distanzmessung, insbesondere den Wert für die Grösse der Messunsicherheit R, oder die Grösse B für die Filterung der Daten aus der Distanzmessung, gegenüber dem vorbestimmten Grundwert zu vergrössern und/oder den Wert für die Grösse des Prozessrauschens Q, oder die Grösse A für die Filterung der Daten aus der Odometrie gegenüber dem vorbestimmten Grundwert zu verkleinern.

**19.** Fahrzeug nach Anspruch 12, wobei die Steuerung weiter ausgebildet ist, bei einem Standort auf einem gekrümmten Abschnitt (6) den Verarbeitungswert für die Daten der Distanzmessung, insbesondere den Wert für die Grösse der Messunsicherheit R, oder die Grösse B für die Filterung der Daten aus der Distanzmessung gegenüber dem vorbestimmten Grundwert zu verkleinern und/oder den Wert für die Grösse des Prozessrauschens Q, oder die Grösse A für die Filterung der Daten aus der Odometrie, gegenüber dem vorbestimmten Grundwert zu vergrössern.

**20.** Fahrzeug nach Anspruch 12, wobei zwei Räder (15,15') des Fahrzeugs in Fahrtrichtung neben einander angeordnet sind und ein drittes Rad (16) des Roboters als Schlepprad ausgebildet ist.

**21.** Fahrzeug nach Anspruch 12, wobei die Sensoren (21) für die Odometriedaten Sensoren aufweisen, welche die Drehung von zwei Rädern des Roboters erfassen.

**Claims**

**1.** A method for moving a vehicle (1) along a predetermined path (3), wherein a current location on the predetermined path (3) and a direction of travel ($\theta$) of the vehicle (1) present at this location is cyclically determined by a state observer by merging odometry data of the vehicle (1) with data on the vehicle location from a wireless distance measurement (Z) and subsequently, a course correction for the vehicle (1) is determined from the obtained location with the obtained direction of travel in a trajectory control system, **characterized in that** processing values are provided with one predetermined basic value respectively for the processing of the odometry data on the one hand and, on the other hand, for the processing of data of the distance measurement in the state observer (Z), and at least one of the processing values is changed with respect to its predetermined basic value depending on the characteristics of the predetermined path at the current location determined so that precise navigation is achieved.

**2.** The method according to Claim 1, wherein the state observer (Z) comprises a Kalman filter or the state observer (Z) is a Kalman filter.

**3.** The method according to Claim 2, wherein the processing values are predetermined basic values for the variables for a process noise Q of the odometry data and a measurement uncertainty R of the data from the distance measurement, wherein at least one of the values for the variables for the process noise Q and the measurement uncertainty R are changed with respect to the predetermined basic values depending on the characteristics of the predetermined path at the current location determined.

**4.** The method according to Claim 1, wherein the state observer comprises a Luenberger observer.

**5.** The method according to Claim 4, wherein, in the Luenberger observer, the processing values are predetermined variables A, B for the respective filtering of the data from the odometry and the data from the distance measurement, wherein at least one of the values for the variables A, B are changed with respect to the predetermined basic values depending on the characteristics of the predetermined path at the current location determined.

**6.** The method according to Claim 1, wherein a characteristic is given by whether the predetermined path at the current location is straight or curved.

**7.** The method according to Claim 2, wherein an unscented or an extended Kalman filter is used as a Kalman filter.

**8.** The method according to Claim 1, wherein, in the case of a location with the characteristic of a straight section (4, 5) or the characteristic of an increased grip of the substrate, the processing value for the data of the distance measurement, in particular, the value for the variable of the measurement uncertainty R, or the variable B for the filtering of the data from the distance measurement is enlarged with respect to the predetermined value and/or the value for the variable of the process noise Q, or the variable A for the filtering of the data from the odometry is reduced with respect to the predetermined value.

**9.** The method according to Claim 1, wherein in a location with the characteristic of a curved section (6) and/or the characteristic of a reduced grip of the substrate the processing value for the data of the distance measurement, in particular, the value for the variable of the measurement uncertainty R, or the variable B for the filtering of the data from the distance measurement is reduced with respect to the predetermined value and/or the value for the variable of the process noise Q, or the variable A for the filtering of the data from the odometry is increased with respect to the predetermined value.

**10.** The method according to Claim 1, wherein at least one of the processing values, in particular, for the variables for the process noise Q and the measurement uncertainty R or the variables A,B for the respective filtering of the data from the odometry and the data from the distance measurement are changed with respect to the predetermined basic values depending on the intensity of the characteristics.

11. The method according to Claim 1, wherein the vehicle is a robot.

12. A vehicle (1) with a drive configuration for movement on the substrate, sensors (21) for odometry data from the movement of wheels (15, 15'), a steering assembly for changing the direction of movement of the vehicle, a control system (22) for the steering assembly and a receiving unit (19') for the data of transmitters for a wireless distance measurement is **characterized in that** the control system (22) is designed to cyclically determine a distance of the vehicle (1) to a distance measuring point from the data of the distance measurement and to merge it with the with the odometry data using a state observer (Z), thereby determining a current location and a direction of travel (8) of the vehicle (1), **characterized in that** the control system (22) is furthermore designed to change predetermined basic values for the processing of the odometry data and the data of the distance measurement of the state observer (Z), depending on the characteristics of the predetermined path at the predetermined current location so that a precise navigation is achieved.

13. The vehicle (1) according to Claim 12, wherein the state observer (Z) comprises a Kalman filter or is a Kalman filter.

14. The vehicle (1) according to Claim 13, wherein the predetermined basic values for the processing of the odometry data and the data from the distance measurement are variables for the process noise Q and the measurement uncertainty R of the Kalman filter.

15. The vehicle (1) according to Claim 12, wherein the state observer comprises a Luenberger observer.

16. The vehicle (1) according to Claim 15, wherein the predetermined variables are variables for the respective filtering of the data A from the odometry and the data B from the distance measurement.

17. The vehicle according to Claim 12, wherein a characteristic is given by whether the predetermined path at the current location is straight or curved.

18. The vehicle (1) according to Claim 12, wherein the control system is further designed, at a location on a straight section (5), to increase the processing value for the data of the distance measurement, in particular, the value for the variable of the measurement uncertainty R or the variable B for the filtering of the data from the distance measurement with respect to the predetermined basic value and/or to reduce the value for the variable of the process noise Q or the variable A for the filtering of the data from the odometry with respect to the predetermined basic value.

19. The vehicle according to Claim 12, wherein the control system is further designed, at a location on a curved section (6), to reduce the processing value for the data of the distance measurement, in particular, the value for the variable of the measurement uncertainty R or the variable B for the filtering of the data from the distance measurement with respect to the predetermined basic value and/or to increase the value for the variable of the process noise Q or the variable A for the filtering of the data from the odometry with respect to the predetermined basic value.

20. The vehicle according to Claim 12, wherein two wheels (15, 15') of the vehicle are arranged next to each other in the direction of travel and a third wheel (16) of the robot is designed as a towing wheel.

21. The vehicle according to Claim 12, wherein the sensors (21) for the odometry data comprise sensors that detect the rotation of two wheels of the robot.

**Revendications**

1. Procédé, destiné à déplacer un véhicule (1) le long d'une trajectoire (3) prédéfinie, un site actuel sur la trajectoire (3) prédéfinie, ainsi qu'une direction de déplacement (θ) du véhicule (1) présente sur ladite trajectoire étant déterminés cycliquement par la fusion de données odométriques du véhicule (1) et de données concernant le site du véhicule, issues d'une mesure de la distance sans fil par un observateur d'état (Z) et par la suite, à partir du site obtenu avec la direction de déplacement obtenue, une correction de cap pour le véhicule (1) étant déterminée dans un régulateur de trajectoire, **caractérisé en ce que** des valeurs de traitement avec chaque fois une valeur de base prédéfinie pour d'une part, le traitement des données odométriques et d'autre part des données de mesure de la distance sont prévues dans l'observateur d'état (Z), et au moins l'une des valeurs de traitement est modifiée par rapport à sa valeur de base prédéfinie, en fonction des propriétés de la trajectoire prédéfinie sur le site actuel défini, de sorte à obtenir une navigation précise.

2. Procédé selon la revendication 1, l'observateur d'état (Z) comportant un filtre de Kalman ou l'observateur d'état (Z) étant un filtre de Kalman.

3. Procédé selon la revendication 2, les valeurs de traitement étant des valeurs de base prédéfinies pour les grandeurs pour un bruit de procédé Q des données odométriques et une insécurité de mesure R des données issues de la mesure de la distance, au moins l'une des valeurs pour les grandeurs pour le bruit de procédé Q et l'insécurité de mesure R par rapport aux valeurs de base prédéfinies étant modifiées, en fonction des propriétés de la trajectoire prédéfinie sur le site actuel défini.

4. Procédé selon la revendication 1, l'observateur d'état comportant un observateur Luenberger.

5. Procédé selon la revendication 4, dans l'observateur Luenberger, les valeurs de traitement étant des grandeurs prédéfinies A, B pour le filtrage respectif des données issues de l'odométrie et des données issues de la mesure de la distance, au moins l'une des valeurs pour les grandeurs A, B étant modifiée par rapport aux valeurs de base prédéfinies, en fonction des propriétés de la trajectoire prédéfinie sur le site actuel défini.

6. Procédé selon la revendication 1, une propriété étant donnée par le fait si la trajectoire prédéfinie sur le site actuel est conçue en étant rectiligne ou curviligne.

7. Procédé selon la revendication 2, en tant que filtre de Kalman étant utilisé un filtre de Kalman non parfumé ou un filtre de Kalman étendu.

8. Procédé selon la revendication 1, pour un site doté de la propriété d'un tronçon rectiligne (4, 5) ou de la propriété d'une adhérence élevée du sol, la valeur de traitement pour les données de la mesure de la distance, notamment la valeur pour la grandeur de l'insécurité de mesure R, ou la grandeur B pour le filtrage des données issues de la mesure de la distance étant augmentée par rapport à la valeur prédéfinie et/ou la valeur pour la grandeur du bruit de procédé Q, ou la grandeur A pour le filtrage des données issues de l'odométrie étant diminuée par rapport à la valeur prédéfinie.

9. Procédé selon la revendication 1, pour un site doté de la propriété d'un tronçon curviligne (6) et/ou de la propriété d'une adhérence réduite du sol, la valeur de traitement pour les données de la mesure de la distance, notamment la valeur pour la grandeur de l'insécurité de mesure R, ou la grandeur B pour le filtrage des données issues de la mesure de la distance étant diminuée par rapport à la valeur prédéfinie et/ou la valeur pour la grandeur du bruit de procédé Q, ou la grandeur A pour le filtrage des données issues de l'odométrie étant augmentée par rapport à la valeur prédéfinie.

10. Procédé selon la revendication 1, au moins l'une des valeurs de traitement, notamment pour les grandeurs pour le bruit de procédé Q et l'insécurité de mesure R ou les grandeurs A, B pour le filtrage respectif des données issues de l'odométrie et les données issues de la mesure de la distance étant modifiée par rapport aux valeurs de base prédéfinies en fonction de l'intensité des propriétés.

11. Procédé selon la revendication 1, le véhicule étant un robot.

12. Véhicule (1), pourvu d'une configuration d'entraînement pour le déplacement sur le sol, de capteurs (21) de données odométriques à partir du déplacement de roues (15, 15'), d'un ensemble de direction pour la modification de la direction de déplacement du véhicule, d'un système de commande (22) pour l'ensemble de direction et d'une unité réceptrice (19') pour les données d'émetteurs pour une mesure de la distance sans fil, **caractérisé en ce que** le système de commande (22) est conçu pour déterminer cycliquement à partir des données de la mesure de la distance une distance du véhicule (1) par rapport à un point de mesure de la distance et pour les faire fusionner par un observateur d'état (Z) avec les données odométriques et pour en déterminer un site actuel et une direction de déplacement (8) du véhicule (1), **caractérisé en ce que** le système de commande (22) est conçu par ailleurs pour modifier des valeurs de base prédéfinies pour le traitement des données odométriques et des données de la mesure de la distance de l'observateur d'état (Z), en fonction des propriétés de la trajectoire prédéfinie sur le site actuel défini, de sorte à obtenir une navigation précise.

13. Véhicule (1) selon la revendication 12, l'observateur d'état (Z) comportant un filtre de Kalman ou étant un filtre de Kalman.

14. Véhicule (1) selon la revendication 13, les valeurs de base prédéfinies pour le traitement des données odométriques et des données issues de la mesure de la distance étant des grandeurs pour le bruit de processus Q et l'insécurité de mesure R du filtre de Kalman.

15. Véhicule (1) selon la revendication 12, l'observateur d'état comportant un observateur Luenberger.

16. Véhicule (1) selon la revendication 15, les grandeurs prédéfinies étant des grandeurs pour le filtrage respectif des données A issues de l'odométrie et les données B issues de la mesure de la distance.

17. Véhicule selon la revendication 12, une propriété étant donnée par le fait si la trajectoire prédéfinie sur le site actuel est conçue en étant rectiligne ou curviligne.

18. Véhicule (1) selon la revendication 12, le système de commande étant conçu par ailleurs, dans le cas d'un site sur un tronçon rectiligne (5) pour augmenter la valeur de traitement pour les données de la mesure de la distance, notamment la valeur pour la grandeur de l'insécurité de mesure R, ou la grandeur B pour le filtrage des données issues de la mesure de la distance, par rapport à la valeur de base prédéterminée et/ou pour diminuer la valeur pour la grandeur du bruit de processus Q, ou la grandeur A pour le filtrage des données issues de l'odométrie par rapport à la valeur de base prédéfinie.

19. Véhicule selon la revendication 12, le système de commande étant conçu par ailleurs, dans le cas d'un site sur un tronçon curviligne (6) pour diminuer la valeur de traitement pour les données der mesure de la distance, notamment la valeur pour la grandeur de l'insécurité de mesure R, ou la grandeur B pour le filtrage des données issues de la mesure de la distance par rapport à la valeur de base prédéterminée et/ou pour augmenter la valeur pour la grandeur du bruit de processus Q, ou la grandeur A pour le filtrage des données issues de l'odométrie par rapport à la valeur de base prédéfinie.

20. Véhicule selon la revendication 12, deux roues (15, 15') du véhicule étant placées côte à côte dans la direction de déplacement et une troisième roue (16) du robot étant conçue sous la forme d'une roue traînante.

21. Véhicule selon la revendication 12, les capteurs (21) pour les données odométriques comportant des capteurs, lesquels détectent la rotation de deux roues du robot.

Fig 1

Fig 2

3/4

```
  30 ──┐  ┌─────────────────────────────┐
        └──│   Initialisierung der Navigation   │
           └─────────────────────────────┘
                        │
                        ▼
  31 ──┐  ┌─────────────────────────────┐
        └──│   Erfassung der Odometriedaten    │◄────────┐
           └─────────────────────────────┘          │
                        │                            │
                        ▼                            │
  32 ──┐  ┌─────────────────────────────┐          │
        └──│      Berechnung des          │          │
           │   odometrischen Fahrstatus    │          │
           └─────────────────────────────┘          │
```

33

nein     UWB Messung     ja
         verfügbar ?

35 — Erfassen der Eigenschaften des vorbestimmten Pfads

34

Berechnung des angenommenen Standorts auf Grund des odometrischen Fahrstatus

36 — Dynamische Anpassung des Werts für die Messunsicherheit R und das Prozessrauschen Q

37 — Berechnung des angenommenen Standorts durch einen Unscented Kalman Filter

38 — Berechnung der Kurskorrektur durch den Trajektorenregler

39     Ende des vorbestimmten Pfads ?     nein

40 — Stop

Fig 3

Stand der Technik

Fig 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3018548 A